# EUROPEAN PATENT APPLICATION

(11) **EP 2 400 385 A1**
(43) Date of publication of application: **28.12.2011**
(21) Application number: 10305688.3
(22) Date of filing: 28.06.2010
(51) Int. Cl.: G06F 9/44

(54) **Interface between a plurality of graphical applications**

(71) Applicant: Alcatel Lucent, 75007 Paris (FR)
(72) Inventor: Justen, Pascal, 1150 Sint-Pieters-Woluwe (BE); Acke, Willem, 2820 Bonheiden (BE); Van Leeuwen Tom, 9032 Wondelgem (BE); Stevens, Christoph, 9190 Stekene (BE)
(74) Representative: ALU Antw Patent Attorneys

(57) **Abstract**

A method to deliver graphical contents between at least one graphical sourcing application of a plurality of graphical sourcing applications (SORAP1, ..., SORAPi,..., SORAPn), and at least one graphical sinking application , comprises a step of providing an interface (VGL0; VGL1) between said plurality of graphical sourcing applications (SORAP1, ..., SORAPi,..., SORAPn), and said at least one graphical sinking application (SIAPl,...,SIAPm), said method includes a step of allocating, by said interface, at least one of said graphical sourcing applications to at least one virtual frame buffer (VFBSl,...,VFBSi,...,VFBSk) for temporarily receiving graphical contents from said at least one sourcing graphical application, said method including a step of providing, by said interface (VGL0; VGL1) of an identifier of said at least one virtual frame buffer (VFBSl,...,VFBSi,...,VFBSn) to said at least one sinking application (SIAPl,...,SIAPm) for enabling said at least one sinking application (SIAPl,...,SIAPm) getting contents from said at least one identified virtual frame buffer. Such an interface is disclosed as well.

## Description

The present invention relates to smooth delivery of graphical contents between a plurality of graphical applications .

New generation set-top boxes and TV's will have more and more powerful graphics hardware, enabling more fancy IP TV user interfaces and applications on the TV. However, upgrading existing set-top box deployments towards newer hardware, induces both an operational, as well as a capital investment for service providers. As a result, the capabilities of deployed set-top boxes always lag behind compared to the available software capabilities.

One approach to overcome these problems is to push the execution and rendering of an application to a server and stream the visual output to the client set-top box using standard video codecs. This means that the client set-top-box can be reduced to a simple cheap hardware accelerated video decoder driven by a drastically reduced and simplified software layer, comprising a video display driver enhanced with a simple off-the-shelf software component that feeds back user input events to the server in the network. The big challenge of such an approach however is to make this scalable and cost-effective on the server side : the graphical rendering system on the server must be able to manage and support a large number of applications in parallel, while keeping resources balanced. Applications should be such as to be launched on demand by the end-user. This implies that the final user screen may be composed out of screen outputs from different applications.

Prior art solutions fail to meet such requirements as they are dedicated towards a limited, pre-identified set of applications of a user such that there is one dedicated server per user.

It is therefore an object of the invention to provide a solution which solves the aforementioned problems.

According to embodiments of the present invention this object is achieved by means of the provision of an interface between a plurality of graphical sourcing applications and at least one graphical sinking application, said interface being adapted to allocate to at least one of said graphical sourcing applications at least one virtual frame buffer for temporarily receiving graphical contents from said at least one graphical sourcing application, said interface being further adapted to provide an identifier of said at least one virtual frame buffer to said at least one sinking application for enabling said at least one sinking application getting contents from said at least one identified virtual frame buffer.

In this way a new control layer at the server-side, located between sourcing applications which are adapted to provide graphical contents and a sinking application, which is adapted to receive graphical contents, is provided. In this way the rendering from the physical framebuffer is decoupled from the sourcing application itself as each sourcing application is adapted to render into a Virtual Framebuffer in stead of into a real framebuffer.

In some embodiments this interface is further adapted to identify at least one of said graphical sourcing applications as an at least one intermediate composing application with an associated at least one virtual frame buffer and to provide the identifier of said associated at least one virtual frame buffer to said at least one sinking application thereby enabling said at least one sinking application getting contents from said at least one virtual buffer associated to said intermediate composing application.

With respect to source applications, which role is on one hand to generate or produce graphical contents, generally represented in the form of pixels, and on the other hand to provide this graphical contents to one or more virtual frame buffers associated to it , and to sinking applications , which role is to use or consume graphical contents via receiving this graphical contents from one or more virtual frame buffers possibly associated to the source applications and to pass it to an external system such as a local real frame buffer, or an encoder, an intermediate application may fulfill the role of source and sink application at the same time.

The allocation of one or more of the sourcing applications as being an intermediate composing application adds to the versatility of the interface.

By the interface being further adapted to control the transfer of contents from the at least one virtual frame buffer allocated to the sourcing application into the at least one virtual frame buffer associated to said intermediate composing application, the presentation of the graphical information is further decoupled from the rendering as the presentation is now being delegated to at least one dedicated intermediate composer application, e.g. cube containing several movies, programs,..., or a mosaic picture composed of these movies programs images, etc.

The at least one sinking application, may terminate the process started from the content generation by the sourcing application as it can use the contents of the virtual framebuffers of which it received the identifiers, to e.g. feed an external subsystem such as e.g. an encoder. Alternatively the sinking application may transmit encoded data onto a communications link to a user in case the sinking application corresponds to the encoding application itself.

In the former case, the sink application may forward the contents of the virtual frame buffer to an encoder which can further act on this received graphical contents by means of encoding it and sending encoded data to a remotely connected client.

In the latter case, where the sinking application was itself an encoding application, it will receive its input data as contents from the identified virtual frame buffer. This sinking encoding application is then adapted to transform this received contents and can then be further coupled to a transmitter which transmitter obtains the encoded data from the encoder

Alternatively the sinking application can also be coupled, e.g. for debugging purposes, to a real framebuffer of the server itself, e.g. for visualizing the result of an intermediate composing operation. In that case the sinking application is adapted to get the contents of the composing virtual frame buffer and dump this contents into the real frame buffer.

Such an interface may pertain to a distinct user, and be adapted to communicate with another interface pertaining to another user.

This enables scalability within the server, as per user an interface can be added , which can, in some embodiments communicate with an interface for another user. This may be useful e.g. in gaming environments enabling users sharing their view.

In other embodiments the interface may be further adapted to identify said sourcing applications and said at least one sinking application from a group of applications pertaining to said user.

These embodiments bring even more versatility as from a group of applications, the interface will then identify some as sourcing applications, and others as sinking applications. This can however change, e.g. from user to user, adding to much more flexibility in the system.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Fig 1. shows a high level schematic of an embodiment of an interface VGL0 between a plurality of graphical sourcing applications and at least one sinking applications,
Fig. 2 shows another high level schematic of another embodiment VGL1 of an interface according to the invention.

It is to be remarked that the following merely illustrates the principles of the invention. It will thus be appreciated that those skilled in the art will be able to devise various arrangements that, although not explicitly described or shown herein, embody the principles of the invention and are included within its spirit and scope. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

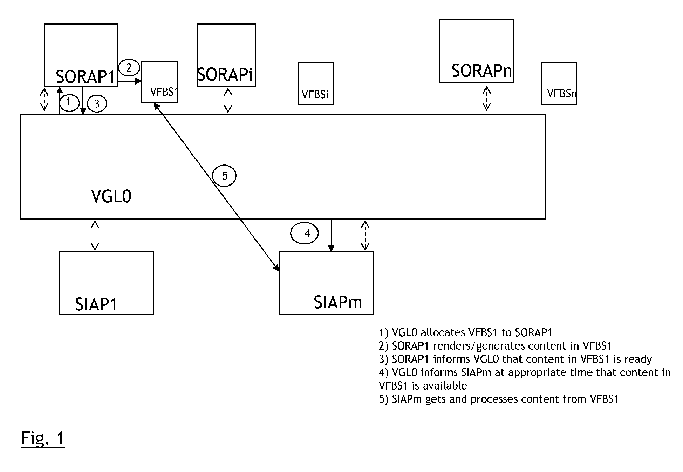

A high level schematic of an embodiment of an interface according to the present invention within a graphics application environment is shown in Fig. 1. This figure shows a plurality of sourcing graphical applications denoted SORAP1 to SORAPn, which , by means of their capability of providing graphical content to other applications are thus denoted as sourcing application. These are coupled to an interface VGL0. This interface is adapted to allocate to one or more of these sourcing applications one or more virtual frame buffers. In Fig. 1 it may be suggested that all sourcing applications are allocated to one virtual frame buffer, respectively denoted VFBl to VFBn. However, the interface may just allocate one or more virtual frame buffers of a pool of buffers to one sourcing application. Any number between 1 and the number of all sourcing applications can be allocated to any number between 1 and the number of available virtual frame buffers. This number of virtual frame buffers does not need to be identical to the number of sourcing applications.

The interface VGL0 is further coupled to m sinking applications, being denoted SIAPl to SIAPm. The coupling of the interface to the sourcing and sinking applications is denoted by means of the dashed double arrows between the interface and the respective applications. In some embodiments there is only one sinking application. Sinking applications are denoted as such because of their ability to only "sink" , thus consume content/pixels from virtual framebuffers, without generating or modifying the contents within the virtual frame buffers coupled to them and from which they receive the graphical contents.

An embodiment of the interface is then adapted to provide an identifier of one or more of the virtual frame buffers allocated to the sourcing applications, to one or more of these sinking applications. This will enable these sinking applications to get their data from the virtual frame buffer, which was communicated by the interface to them, and to perform an operation on it such as a data transfer, which, can thus be a transmission over the communications link to a user, or a data transfer to a real frame buffer of the server such as to view the contents of the virtual frame buffers.

During operation, each sourcing application may thus put the content it produces into its associated virtual frame buffer, and the interface VGL0 will then determine which of these virtual frame buffers will be coupled to one of these sinking applications, this selection also being performed by means of the interface VGL0. These allocations may be initially set up by means of static configuration data within or communicated to the interface itself, and can later dynamically be reconfigured , e.g. via another interface, denoted as the administrative interface of the VGL interface to a user. This VGL-admin interface is then coupled to the VGL interface itself, and can be controlled via standard Operations And Maintenance applications for interfacing with the VGL0 interface itself. In this respect it can thus control the interconnections allocated by the VGL0 itself. By this extra administrative interface to a user, extra features such as e.g. maintenance and troubleshooting interventions by an operator will also become possible, as well as the reconfiguration of the composing intermediate applications.

Fig. 1 further gives an embodiment of the method used during operation of the interface VGL0. After the allocation of the virtual frame buffer VFBS1 to SORAP1 inn step 1, SORAP1 provides its generated content to VFBS1 in step 2. This sourcing application SORAP1 accordingly informs the interface that the contents in VFBS1 is ready to get fetched, in step 3. In some embodiments this can be followed by a locking, by the interface, of this virtual frame buffer, such that no other application will be able to further provide its content to this respective buffer. In the embodiment of Fig. 1 this is not indicated. VGL0 accordingly signals sinking application SIAPm in step 4 that SORAP1 has terminated to provide contents to its allocated virtual frame buffer VFBS1, so that this content, which can be a frame, can be further used by SIAPm in step 5. As soon as SIAPm has retrieved the contents from VFBSl, SIAPm can inform VGL0 about this such that VGL0 can again unlock VFBS1.

Such virtual frame buffers are allocated by the interface for each application and may comprise one or more VRAM buffers which are presented to an application as having an address of a real framebuffer. The application can then use this allocated virtual frame buffer in a similar way as they are used to when dealing with a real framebuffer, e.g. read and write the framebuffer. The interface may then further signal the SIAP about the availability of a fresh Virtual Frame Buffer generated/rendered by a source application SORAP.

From the perspective of an application, nothing really changes such that it is possible to take a precompiled, off the shelf application and plug it on the interface. This is possible by means of e.g. embodiments of the interface such as VGL0 being also adapted to use the same application programming interfaces as the applications do. In this way the applications can be directly plugged into this VGL0 interface.

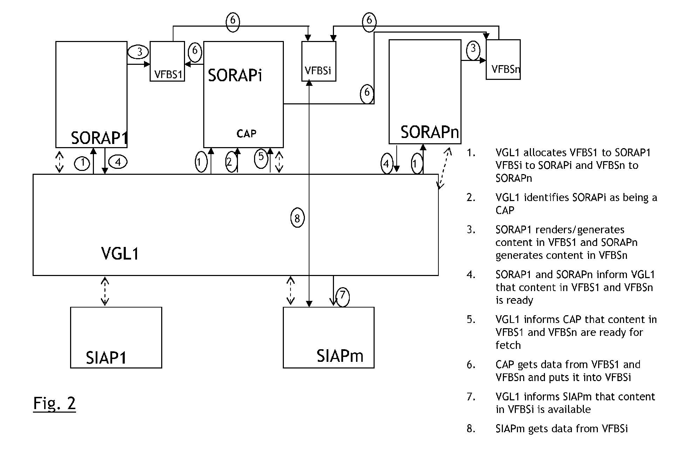

Fig. 2 shows an enhanced embodiment of such an interface VGL1. In this embodiment the interface VGL1 will first select or identify one of the graphical sourcing applications as being an intermediate composing application. Such an intermediate composing application is denoted CAP. In the embodiment of Fig. 2, SORAPi is selected by the VGL1 interface as being this intermediate application. The function of such an intermediate composing application and its associated buffer is to enable an intermediate composing step getting contents from the virtual frame buffer generated by a source application. After the earlier allocation of the respective virtual frame buffers VFBSl and VFBSn to the respective sourcing applications SORAPl and SORAPn in step 1, during which step also virtual frame buffer VFBSi is allocated to SORAPi, and the identification of sourcing application SORAPi as being an intermediate composing application CAP in step 2 , the respective souring applications SORAPl and SORAPn will provide their contents into virtual frame buffers VFBSl and VFBSn in step 3. They will then inform the interface in step 4 that their respective contents is ready to get fetched from these respective virtual frame buffers. The embodiment VGL1 of Fig. 2 will accordingly inform the intermediate composing application CAP that the contents of virtual frame buffers VFBl and VFBn are ready to be taken in, by means of the signaling message in step 5. The sequence with which this fetching , performed in step 6, has to be done is also determined by the interface, and is as well contained in the message from VGL1 to CAP in step 5. The interface VGL1 furthermore is not only adapted to control the sequence of this data transfer, but also the size, as the total size of the virtual frame buffer associated to CAP should normally not be exceeded. This means that the data, before being transferred from a virtual frame buffer to the intermediate virtual frame buffer, may in some cases be resized under control of the interface . This can be done in different ways, e.g. via a scaling or transformation operation under control of the interface VGL1.

In step 6 VFBSi of CAP gets data from VFBSl and VFBSn, in the correct sequence, and with the correct size. This is followed by a step 7 where VGL1 informs the sinking application that the content in VFBSi is ready for being fetched, such that SIAPm can retrieve this data from this virtual frame buffer allocated to CAP. This getting of contents is then performed in step 8.

Such an embodiment has the advantage that applications may expose and share their contents via their virtual frame buffer with that of another application .

As a consequence, contents of the virtual frame buffer of one application can be used by another application, being the intermediate composing application, as a source image or texture, which can be used for further encoding or rendering in the sinking application. If the involved applications use the same Graphical Processing Unit, Virtual frame buffers can be passed by reference meaning that a pointer is passed The value of the pointer is usually an index or an address. An advantage of passing or copying a pointer in stead of the object itself, is that the former takes less time and uses less memory to copy/duplicate. In our case, VGL1 may pass a pointer of e.g. 4 bytes long s the pointer may contain a numerical index that identifies uniquely and unambiguously a VRAM buffer to the next application in the chain, in stead of passing the contents of the buffer itself, which would require copying a buffer which size may exceed one or several megabytes. With embodiments of the interface according to the invention no pixels or data are copied amongst sourcing applications themselves, but only between sourcing applications virtual frame buffers and that of the composing application. Rendered images can thus remain in the same GPU memory which is very efficient because no bus transfers are involved. This is in contrast to the state of the art which usually makes use of a PCI Express bus

For each Virtual frame buffer, some embodiments of the interface are also able to control the screen swap rate, defined in frames per seconds (FPS) and which refers to the update/refresh rate of the virtual frame buffers. This control can be performed by VGL1 in between step 4 and step 5. This feature enables to control the amount of CPU and GPU cycles being used by the application, and hence to manage these overall system resources in terms of available FPS budget, with FPS being the abbreviation of updated frames per seconds. The higher the FPS an applications needs, the more the GPU has to perform calculations and the less resources are available to other applications, but the smoother an application will show. Most European countries follow the PAL TV standard of 25 FPS, or 25 screen refreshes per second, each screen lasting for 40 milliseconds, while in the US the NTSC standard imposes a frame rate of approx. 30 FPS. A possible way to implement this is based on measurements perform by the interface of the time interval between provision of successive frames. By controlling the rate of retrieving the content by the intermediate application, from the virtual frame buffers associated to the sourcing applications, the speed of rendering the final frames by the sink can be controlled.

An intermediate application can further operate on the contents provided to its associated virtual frame buffer. As an example of such an intermediate application, a mosaic or cube composer functions as a sink for the connected source applications (video, browser, etc.) but it has the role of source because it renders mosaic pictures or cube faces based on contents retrieved from virtual framebuffers of source applications. It should further be mentioned that more than one intermediate application may be present, e.g. it is for instance possible in our system to connect source applications to the cube which is connected to the mosaic which is finally connected to the encoder.

The result is thus a method which combines controlled GPU resource sharing and management with high modularity and flexibility (the way applications are dynamically composed and glued together.

In most embodiments the interface together with the sourcing and sinking applications are residing in the server. In general one interface, with coupled applications is attributed per user. Several of these interfaces, each per user, can then communicate together e.g. for purposes of gaming. In such environments a session ID identifier can be used to discriminate several possible flows of data transfer pertaining to several parallel sessions of one application..

In even more advanced embodiments of an interface according to the invention, this interface coupled to a plurality of graphical applications, without being initially predefined of whether these applications are sourcing or sinking applications. The interface is then adapted to allocate some of these applications as sourcing applications, and others as sinking application. This can be further adapted in a dynamic way e.g. when one composer application has to be replaced by another one.

While the principles of the invention have been described above in connection with specific apparatus, it is to be clearly understood that this description is made only by way of example and not as a limitation on the scope of the invention, as defined in the appended claims.

## Claims

**1.** Interface (VGL0; VGL1) between a plurality of graphical sourcing applications (SORAP1, ..., SORAPi,..., SORAPn) and at least one graphical sinking application (SIAPl,...,SIAPm), said interface (VGL0; VGL1) being adapted to allocate to at least one of said graphical sourcing applications at least one virtual frame buffer (VFBSl,...,VFBSi,...,VFBSk) for temporarily receiving graphical contents from said at least one sourcing graphical application, said interface (VGL0; VGL1) being further adapted to provide an identifier of said at least one virtual frame buffer (VFBSl,...,VFBSi,...,VFBSn) to said at least one sinking application (SIAPl,...,SIAPm) for enabling said at least one sinking application (SIAPl,...,SIAPm) getting contents from said at least one identified virtual frame buffer.

**2.** Interface (VGL0; VGL1) according to claim 1 further being adapted to identify at least one (SORAPi) of said graphical sourcing applications as an at least one intermediate composing application (CAP) with an associated allocated at least one virtual buffer (VFBSi) and to provide the identifier of said at least one virtual buffer to said at least one sinking application (SIAPl,...,SIAPm) for enabling said at least one sinking application getting contents from said at least one associated virtual buffer .

**3.** Interface (VGL) according to claim 2, further being adapted to control the transfer of contents from said at least one allocated virtual frame buffer (VFB1, ...,VFBn) into the virtual frame buffer (VFBi) associated to said composing application.

**4.** Interface according to claims 1-3, wherein said interface pertains to a distinct user.

**5.** Interface according to claim 4, further being adapted to communicate with another interface pertaining to another user.

**6.** Interface according to any of the claims 1-4 being adapted to identify said sourcing applications and said at least one sinking application from a group of applications pertaining to said user.

**6.** Interface according to claims 1-5 wherein said sinking applications can be an encoding or a viewing application.

**7.** Method to deliver graphical contents between at least one graphical sourcing application of a plurality of graphical sourcing applications (SORAP1, ..., SORAPi,..., SORAPn), and at least one graphical sinking application , said method comprises a step of providing an interface (VGL0; VGL1) between said plurality of graphical sourcing applications (SORAP1, ..., SORAPi,..., SORAPn), and said at least one graphical sinking application (SIAPl,...,SIAPm), said method includes a step of allocating, by said interface, at least one of said graphical sourcing applications to at least one virtual frame buffer (VFBSl,...,VFBSi,...,VFBSk) for temporarily receiving graphical contents from said at least one sourcing graphical application, said method including a step of providing, by said interface (VGL0; VGL1) of an identifier of said at least one virtual frame buffer (VFBSl,...,VFBSi,...,VFBSn) to said at least one sinking application (SIAPl,...,SIAPm) for enabling said at least one sinking application (SIAPl,...,SIAPm) getting contents from said at least one identified virtual frame buffer .

**8.** Method according to claim 1, further comprising a step of identifying, by said interface (VGL0,VGL1) of at least one (SORAPi) of said graphical sourcing applications as an at least one intermediate composing application (CAP) with an associated allocated at least one virtual buffer (VFBSi) and a step of providing the identifier of said at least one virtual buffer to said at least one sinking application (SIAPl,...,SIAPm) for enabling said at least one sinking application getting contents from said at least one associated virtual buffer.

**9.** Method according to claim 8, further comprising steps for controlling the transfer of contents from said at least one allocated virtual frame buffer (VFB1, ...,VFBn) into the virtual frame buffer (VFBi) associated to said composing application, by said interface.
